# EUROPEAN PATENT SPECIFICATION

(11) **EP 2 282 563 B1**
(45) Date of publication and mention of the grant of the patent: **15.06.2016**
(21) Application number: 10007196.8
(22) Date of filing: 13.07.2010
(51) Int. Cl.: H04W 4/00, H04L 29/06

(54) **Method for releasing a mobile communication card for the use of a servcie of a mobile communication network and user equipment for interaction with a mobile communication network**
Verfahren zur Freisetzung einer mobilen Kommunikationskarte zur Verwendung des Dienstes eines mobilen Kommunikationsnetzwerks und Benutzergerät zur Interaktion mit dem mobilen Kommunikationsnetzwerk
Procédé de libération d'une carte de communication mobile pour utiliser un service de réseau de communication mobile et équipement d'utilisateur pour l'interaction avec un réseau de communication mobile

(30) Priority: 14.07.2009 EP 09009185; 14.07.2009 US 225291 P
(43) Date of publication of application: 09.02.2011
(73) Proprietor: Deutsche Telekom AG, 53113 Bonn (DE)
(72) Inventor: Mohrs, Walter, 53123 Bonn (DE)
(74) Representative: Schwöbel, Thilo K.

(56) References cited:
- EP-A- 1 009 181
- EP-A- 1 602 999
- WO-A1-2006/087503
- WO-A1-2010/043646
- US-A1- 2008 223 925

## Description

### BACKGROUND

The present invention relates to a method for releasing a mobile communication card for the use of a service of a mobile communication network that allows performing a remote-controlled online activation of the mobile communication card in the mobile communication network.

A method for releasing a mobile communications card for the use of a mobile communications network is known from the prior art document WO 2009 / 071 146 A1, wherein a first activation of the mobile communications card occurs, particularly by the mobile communication network operator, and an identifier of the mobile communications card, particularly an MSISDN associated with the mobile communications card, is stored, wherein and additional permanent release of the mobile communications card is necessary in order to use the services of the mobile communications network, which occurs in that, using the identifier of the mobile communications card, and initial authentication process is performed after a temporary release of the mobile communications card.

Furthermore , the prior art document WO 00 / 79 822 A1 discloses a method and a device for accessing a telecommunications network and for billing telecommunications services, whereby new processes compared to those of classic mechanisms of network providers are presented, services are offered to their customers and fees are charged for providing the same. In this context, the use of an authentication method in the telecommunications network is disclosed which permits a subscriber to certify at any one freely eligible point in time that a payment of a service which has been solicited or which is to be solicited is provided or has been already provided.

Further, the prior art document EP1009181 A1 discloses a method that the customer himself can enter information regarding his identity by means of a telephone keypad and transmit this information to the communications network.

### SUMMARY

An object of the present invention is to provide a method for releasing a mobile communication card, wherein the user of the mobile communication card is securely and doubtless identifiable without the need for face-to-face registration of the user at a service desk of the mobile communication network provider.

The object of the present invention is achieved by a method according to claim 1 for releasing a mobile communication card for the use of a service of a mobile communication network, wherein the service is usable with a user equipment according to claim 7, the user equipment comprising a contactless interface, wherein in a first step the mobile communication card is at least temporarily activated and wherein in a second step the use of the service is released based on an identifier of the mobile communication card and based on at least one authentication parameter of an electronic passport, wherein the at least one authentication parameter being transmitted via the contactless interface. The invention further relates to a method for releasing a mobile communication card for the use of a service of a mobile communication network, wherein in a first step the mobile communication card is at least temporarily activated and wherein in a second step the use of the service is released based on an identifier of the mobile communication card and at least one authentication parameter of an electronic passport.

According to the present invention, it is advantageously possible that the mobile communication card is released for the use of a service of a mobile communication network by a remote-controlled online activation procedure, wherein the mobile communication network provider is capable of securely and doubtless identifying the identity of the user of the mobile communication card. Consequently, the charges for using the service of the mobile communication network can particularly be allocated to the identified user and a misuse due to a wrong login name or a faked identity can be avoided. Preferably, the mobile communication card is provisionally activated by the provider of the mobile communication network in the first step. Subsequently, the mobile communication card is e.g. distributed gratis to a user by the aid of advertising brochures, prospects, inserts of a magazine, booths or the like. A user intending to use the mobile communication card of the mobile communication network provider has to insert the mobile communication card into his user equipment, his cellular phone for instance. Furthermore, the user has to provide his user equipment, especially his cellular phone, with the at least one authentication parameter of his electronic passport, like the user's name. Afterwards, the identifier of the mobile communication card and the at least one authentication is submitted to the mobile communication network provider via the mobile communication network, for example, so that a conclusion of a contract between the mobile communication network provider and the user relating the use of the service of the mobile communication network is achieved and the mobile communication card can be released for the service of the mobile communication network in a remote-controlled manner. According to the present invention, the user equipment comprises a contactless interface, e.g. an NFC interface and/or an RFID interface and/or a ISO/IED 14443 (A, B and/or C) interface, such that the at least one authentication parameter (of the electronic passport or of another electronic document) being transmitted via the contactless interface of the user equipment, e.g. the cellular phone. It is important according to the present invention that the contactless interface is no "wireless interface" in the sense of, e.g., a short range radio interface such as Bluetooth, WLAN or the like, or even a wide area radio interface such as a GSM or Universal Mobile Telecommunications System (UMTS) radio interface. Thereby, it is advantageously possible according to the present invention that a high level of security can be achieved when transmitting the at least one authentication parameter from the electronic passport (or other electronic document). As a consequence of such an enhanced level of data security and data integrity realized by enforcing the use of the contactless interface, it is possible to remotely authenticate the user in view of - for example - a contract related to the use of mobile communication services. Beneficially, the method according to the present invention allows the conclusion of the contract between the mobile communication network provider and the user because the user is securely and doubtless identifiable by the provider of the mobile communication network. The chronological order of accomplishing the first and the second step is arbitrary in the sense of the present invention. The first step can be performed before performing the second step and vice versa.

Preferably, a permanent or a temporarily use of the service is released in the second step. Consequently, a final activation of the mobile communication card is provided in such a manner, that the services of the mobile communication network, like calling, taking calls, sending messages and the like, can be customary used with the mobile communication card as if the mobile communication card has been released for a certain user via face-to-face registration at a service desk of the mobile communication network provider. Alternatively, the service is released only for a certain time period. In another embodiment of the present invention, the mobile communication card is already finally activated for use of standard services in the mobile communication network, wherein the mobile communication card is released by the present method to specific network-services going beyond the standard services, wherein these specific network-services generates additional fees. Suchlike specific network-services comprise calling chargeable telephone numbers or setting up international telephone calls, for instance. Preferably, the second step is evidence for final commissioning a SIM-card (Subscriber Identity Card) or an UICC-card (Universal Integrated Circuit Card).

Preferably, in the second step the identifier and/or the at least one authentication parameter is submitted cryptographically secured to the mobile communication network to increase the data integrity and the protection of the data privacy.

Method according to claim 1, wherein in the second step age, gender, place of residence and/or nationality of the user of the mobile communication card is transmitted to the mobile communication network and/or inquired by the mobile communication network. Beneficially, the mobile communication network provider inquires the age of the user for those services which features general age restrictions. As the age of the user is specified in the data of the electronic passport, a secure remote-controlled verification of the user's age can be performed by the mobile communication network provider before releasing the mobile communication card to services with age restrictions. Furthermore, the present invention provides e.g. specific services which are provided only for user's living in a certain place of residence and/or being a member of a certain nationality or religion.

Preferably, in the second step the authenticity of the identifier and/or of the at least one authentication parameter is verified. In particular, the mobile communication network provider verifies the at least one authentication parameter. For example, the mobile communication network provider compares the age restriction of a certain service with the submitted age of user derived from the electronic passport. In another embodiment, the mobile communication network provider inquires the cellular phone of the user, if the age of the user exceeds a certain age restriction. Subsequently, the cellular phone verifies the age of the user derived from the electronic passport and submits only a "TRUE" or "FALSE"-answer to the mobile communication network. Beneficially, this procedure provides a high protection of data privacy.

Another object of the present invention is a user equipment (UE) for interaction with a mobile communication network comprising a card reader for reading out a mobile communication card and an identification device for reading out an electronic passport, wherein the user equipment further comprises a transmitter unit for submitting an identifier of the mobile communication card and at least one authentication parameter of the electronic passport to the mobile communication network. Beneficially, the user equipment is capable of providing authentication parameters of an electronic passport. As a result, a securely and doubtless identification of the user of the user equipment by the mobile communication network provider is feasible, so that during the first usage of the mobile communication card in the user equipment a valid conclusion of a contract between the mobile communication network provider and the user of the user equipment is practicable. Preferably, the user equipment comprises an encryption unit for encrypting the at least one authentication parameter to increase the data integrity and the protection of the data privacy.

In a preferred embodiment of the present invention the user equipment comprises a personal computer and/or a portable electronic device, particularly a cellular phone, a personal digital assistant (PDA), a digital audio player and/or a laptop.

Another object of the present invention is a user equipment, which is released for a service of a mobile communication network by performing a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 illustrates a schematic flow chart of a first step of a method according to an exemplary embodiment of the present invention.
Figure 2 illustrates a schematic flow chart of a second step of a method according to a first exemplary embodiment of the present invention.
Figure 3 illustrates a schematic flow chart of a second step of a method according to a second exemplary embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

According to the present invention a more efficient utilization of the infrastructure of mobile radio networks is possible, especially for the situation where a compatibility with an older standard of mobile radio communication has to be assured, e.g., with respect to older mobile devices.

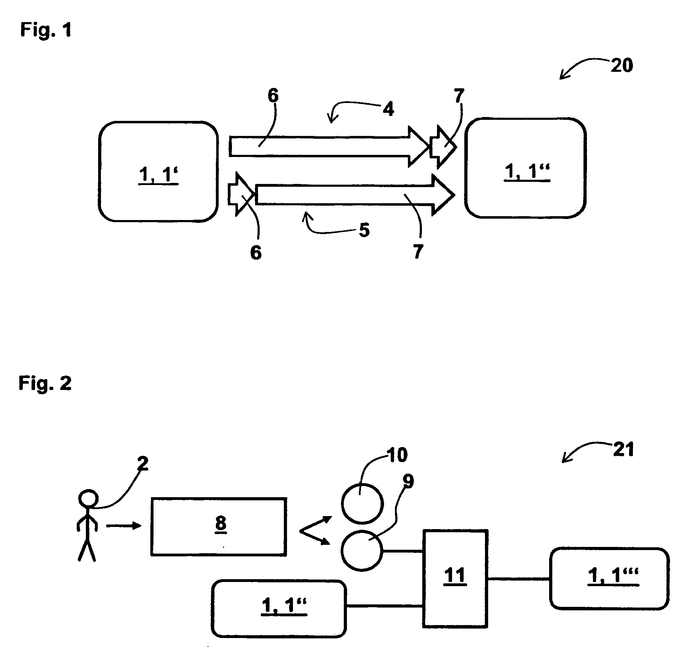

In Figure 1, an exemplary Figure 1 illustrates a schematic flow chart of a first step 20 of a method according to an exemplary embodiment of the present invention, wherein in the first step 20 a brand-new mobile communication card 1 is activated and personalized to a certain user 2 for potential use in a mobile communication network. The step of activation and personalization comprises a first sub-step 6 of the first step 20 which is performed locally and respectively offline by the provider 15 of the mobile communication network and a second sub-step 7 of the first step 20 which is performed remote-controlled and respectively online by the provider 15. Figure 1 shows two different ways 4, 5 of performing the first step 20. In the first way 4 the impersonalized mobile communication card 1' is converted into a personalized mobile communication card 1" by mainly using the first sub-step 6 of the first step 20, whereby in the second way 5 mainly the second sub-step 7 of the first step 20 is used. Preferably, the mobile communication card 1 is activated only temporarily.

Figure 2 illustrates a schematic flow chart of a second step 21 of a method according to a first exemplary embodiment of the present invention, wherein the second step 21 preferably follows the first step 20 as illustrated in figure 1. The second step 21 comprises a first sub-step 8 of the second step 21 verifying if the user's 2 identity is conform with a corresponding authentication parameter of his electronic passport. For example, the user 2 enters his name, wherein in the first sub-step 8 of the second step 21 the entered name is compared to the name derived from the electronic passport. The first sub-step 8 of the second step 21 is performed by a user equipment 16, like a cellular phone, which is provided with the mobile communication card 1. The result of the first sub-step 8 of the second step 21 is either "TRUE" 9 or "FALSE" 10. If the result of the first sub-step 8 of the second step 21 is "TRUE" 9 and the mobile communication card 1, 1" is already activated in the first step 20 the mobile communication card 1, 1" is released for a service of the mobile communication network in a second sub-step 11 of the second step 21. Preferably, the released mobile communication card 1, 1'" is released for performing at least customary services of the mobile communication network, like communication, message and telephone services.

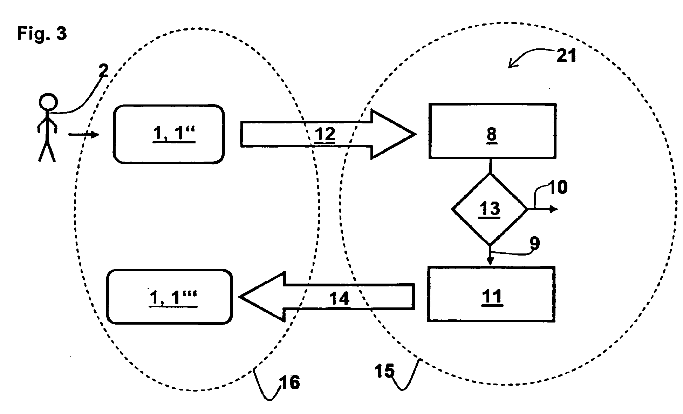

Figure 3 illustrates a schematic flow chart of a second step 21 of a method according to a second exemplary embodiment of the present invention, wherein the second exemplary embodiment is quite similar to the first exemplary embodiment, wherein the verification of the user's identification is performed by the mobile communication network provider 15. The activated and respectively personalized mobile communication card 1, 1" submits a release request 12 to the mobile communication network provider 15, wherein the provider 15 verifies the release request by comparing the user identification with the authentication parameters of the electronic passport in the first sub-step 8 of the second step 21. The result of the verification procedure is requested in a further step 13. If the result is "TRUE" the mobile communication network provider 15 releases the mobile communication card 1, 1" in the second sub-step 11 of the second step 21 for the use of services of the mobile communication network in a remote-controlled online procedure 14.

In an exemplary embodiment, the mobile communication card 1, 1" is provisionally activated by the provider 15 of the mobile communication network in the first step 20 as illustrated in Figure 1. Afterwards, the mobile communication card 1, 1" is attached to an advertising insert of a magazine. The reader of the magazine inserts the activated mobile communication card 1, 1" to his cellular phone 16 and enters personal information, like his name and his home address. Furthermore, the cellular phone 16 is provided with the corresponding authentication parameters of the electronic passport of the user 2, so that the provider 15 or alternatively the cellular phone 16 is capable of validating the personal information entered by the user 2 and securely identifies the user 2. An identifier of the mobile communication card 1, 1" and the personal information or the authentication parameters are submitted from the cellular phone 16 to the provider 15. This procedure allows the conclusion of a contract between the mobile communication network provider 15 and the user 2. Subsequently, the mobile communication network provider 14 releases the mobile communication car 1, 1'" for services of the mobile communication network, wherein the charges for using these services are allocated to the new account of the identified user 2.

## Claims

1. Method for remotely authenticating a user (2) for a first usage of a mobile communication card in view of a contract related to the use of mobile communication services of a mobile communication network provider (15) and for releasing the mobile communication card (1) for the permanent or temporary use of the mobile communication services provided by the mobile communication network provider (15) via a mobile communication network, wherein the mobile communication services comprises standard services like calling, taking calls, sending messages and/or specific network-services like calling chargeable telephone numbers setting up international telephone calls, wherein the mobile communication services are usable with a user equipment (16), wherein the user equipment (16) comprises a contactless interface as an identification device for reading out data of an electronic passport or of another electronic document, wherein the contactless interface comprises a Near Field Communication interface and/or an Radio Frequency Identification Interface and/or an ISO/IED 14443 (A, B and/or C) interface, the method comprising
- - a first step (20) comprising an at least temporarily activating of the mobile communication card (1) and
-- a second step (21) comprising a reading out of at least one authentication parameter of the electronic passport or of the another electronic document by the contactless interface (17) and a submitting of an identifier of the mobile communication card (1) and for the remotely authenticating of the user (2) for the first usage of the mobile communication card at least one authentication parameter of the electronic passport or of the another electronic document to the mobile communication network provider (15) of the mobile communication network, wherein the use of the mobile communication services are remotely released for the mobile communication card (1) based on the identifier of the mobile communication card (1) and based on the at least one authentication parameter of the electronic passport or of the another electronic document, wherein the at least one authentication parameter is transmitted via the contactless interface,
wherein the first and the second step (20, 21) are performed by the user equipment (16) provided with the mobile communication card (1).

2. Method according to claim 1, wherein in the second step (21) the identifier and/or the at least one authentication parameter is submitted cryptographically secured to the mobile communication network provider (15) of the mobile communication network.

3. Method according to one of the claims 1 or 2, wherein the second step (21) further comprises a transmitting of the age, gender, place of residence and/or nationality of the user (2) of the mobile communication card (1) to the mobile communication network provider (15) of the mobile communication network and a performing of the remotely authenticating of the user's personal identity.

4. Method according to one of the previous claims, wherein the second step (21) further comprises a verifying of the authenticity of the identifier and/or of the at least one authentication parameter..

5. Method according to one of the previous claims, wherein the first and/or the second step (20, 21) is/are performed by the mobile communication network provider (15) of the mobile communication network.

6. Method according to one of the previous claims, wherein the second step (21) provides evidence for final commissioning a SIM-card (Subscriber Identity Card) or an UICC-card Universal Integrated Circuit Card.

7. User equipment (16) with a contactless interface as an identification device for remotely authenticating a user (2) for a first usage of a mobile communication card in view of a contract related to the use of mobile communication services of a mobile communication network provider (15) and for releasing the mobile communication card (1) for the permanent or temporary use of the mobile communication services provided by the mobile communication network provider (15) via a mobile communication network , wherein the contactless interface comprises a Near Field Communication interface and/or an Radio Frequency Identification interface and/or an ISO/IED 14443 (A, B and/or C), wherein the identification device provided by the contactless interface is configured to read out data of an electronic passport or of another electronic document, wherein the user equipment (16) further comprises a card reader to be configured to read out the mobile communication card (1), and a transmitter unit configured to submit an identifier of the mobile communication card (1) and at least one authentication parameter of the electronic passport or of the another electronic document to the mobile communication network provider (15) of the mobile communication network in such a manner that the use of the mobile communication services are remotely released for the mobile communication card (1) based on the identifier of the mobile communication card (1) and based on the at least one authentication parameter of the electronic passport or of the another electronic document, wherein the at least one authentication parameter is transmitted via the contactless interface.

8. User equipment (16) according to claim 7, wherein the user equipment (16) comprises an encryption unit for encrypting the at least one authentication parameter.

9. User equipment (16) according to one of the previous claims, wherein the user equipment (16) comprises a personal computer and/or a portable electronic device, particularly a cellular phone, a personal digital assistant, PDA, a digital audio player and/or a laptop.

## Patentansprüche

1. Verfahren zur Fernauthentifizierung eines Benutzers (2) für einen Erstgebrauch einer Mobilkommunikationskarte im Hinblick auf einen Vertrag in Bezug auf die Nutzung von mobilen Kommunikationsdiensten eines Mobilkommunikationsnetzanbieters (15) und für ein Freigeben der Mobilkommunikationskarte (1) zur dauerhaften oder temporären Nutzung der vom Mobilkommunikationsnetzanbieter (15) über ein Mobilkommunikationsnetz bereitgestellten mobilen Kommunikationsdienste, wobei die mobilen Kommunikationsdienste Standarddienste wie das Anrufen, das Entgegennehmen von Anrufen, das Versenden von Mitteilungen und/oder spezielle Netzdienste wie das Anrufen kostenpflichtiger Telefonnummern, das Aufbauen internationaler Telefonanrufe umfassen, wobei die mobilen Kommunikationsdienste mit einem Benutzergerät (16) nutzbar sind, wobei das Benutzergerät (16) eine kontaktfreie Schnittstelle als Identifikationsvorrichtung für das Auslesen von Daten eines elektronischen Ausweises oder eines anderen elektronischen Dokuments umfasst, wobei die kontaktfreie Schnittstelle eine Nahfeldkommunikationsschnittstelle und/oder eine Hochfrequenzerkennungsschnittstelle und/oder eine ISO/IED-14443-(A, B und/oder C)-Schnittstelle umfasst, wobei das Verfahren umfasst:
- einen ersten Schritt (20) umfassend eine mindestens temporäre Aktivierung der Mobilkommunikationskarte (1) und
- einen zweiten Schritt (21) umfassend ein Auslesen von mindestens einem Authentifizierungsparameter des elektronischen Ausweises oder anderen elektronischen Dokuments durch die kontaktfreie Schnittstelle (17) sowie ein Übermitteln einer ID-Kennung der Mobilkommunikationskarte (1) und, für die Fernauthentifizierung des Benutzers (2) für den Erstgebrauch der Mobilkommunikationskarte, mindestens eines Authentifizierungsparameters des elektronischen Ausweises oder anderen elektronischen Dokuments an den Mobilkommunikationsnetzanbieter (15) des Mobilkommunikationsnetzes, wobei die Nutzung der mobilen Kommunikationsdienste für die Mobilkommunikationskarte (1) anhand der ID-Kennung der Mobilkommunikationskarte (1) und anhand des mindestens einen Authentifizierungsparameters des elektronischen Ausweises oder anderen elektronischen Dokuments fernfreigegeben wird, wobei der mindestens eine Authentifizierungsparameter über die kontaktfreie Schnittstelle gesendet wird,
wobei der erste und zweite Schritt (20, 21) vom Benutzergerät (16), das mit der Mobilkommunikationskarte (1) bereitgestellt wird, ausgeführt werden.

2. Verfahren nach Anspruch 1, wobei im zweiten Schritt (21) die ID-Kennung und/oder der mindestens eine Authentifizierungsparameter an den Mobilkommunikationsnetzanbieter (15) des Mobilkommunikationsnetzes kryptografisch gesichert übermittelt wird.

3. Verfahren nach einem der Ansprüche 1 oder 2, wobei der zweite Schritt (21) ferner umfasst: ein Senden des Alters, Geschlechts, Wohnorts und/oder der Staatsangehörigkeit des Benutzers (2) der Mobilkommunikationskarte (1) an den Mobilkommunikationsnetzbetreiber (15) des Mobilkommunikationsnetzes und Durchführen der Fernauthentifizierung der persönlichen Identität des Benutzers.

4. Verfahren nach einem der vorhergehenden Ansprüche, wobei der zweite Schritt (21) ferner umfasst: ein Verifizieren der Authentizität der ID-Kennung und/oder des mindestens einen Authentifizierungsparameters.

5. Verfahren nach einem der vorhergehenden Ansprüche, wobei der erste und/oder zweite Schritt (20, 21) durch den Mobilkommunikationsnetzanbieter (15) des Mobilkommunikationsnetzes durchgeführt wird/werden.

6. Verfahren nach einem der vorhergehenden Ansprüche, wobei der zweite Schritt (21) einen Nachweis für die finale Inbetriebnahme einer SIM-Karte (Teilnehmeridentitätskarte) oder einer UICC-Karte, Universal Integrated Circuit Card, bereitstellt.

7. Benutzergerät (16) mit einer kontaktfreien Schnittstelle als Identifikationsvorrichtung zur Fernauthentifizierung eines Benutzers (2) für einen Erstgebrauch einer Mobilkommunikationskarte im Hinblick auf einen Vertrag in Bezug auf die Nutzung von mobilen Kommunikationsdiensten eines Mobilkommunikationsnetzanbieters (15) und für ein Freigeben der Mobilkommunikationskarte (1) zur dauerhaften oder temporären Nutzung der vom Mobilkommunikationsnetzanbieter (15) über ein Mobilkommunikationsnetz bereitgestellten mobilen Kommunikationsdienste, wobei die kontaktfreie Schnittstelle eine Nahfeldkommunikationsschnittstelle und/oder eine Hochfrequenzerkennungsschnittstelle und/oder eine ISO/IED-14443-(A, B und/oder C)-Schnittstelle umfasst, wobei die durch die kontaktfreie Schnittstelle bereitgestellte Identifizierungsvorrichtung für das Auslesen von Daten eines elektronischen Ausweises oder anderen elektronischen Dokuments ausgelegt ist, wobei das Benutzergerät (16) ferner umfasst: einen Kartenleser, der für das Auslesen der Mobilkommunikationskarte (1) zu konfigurieren ist, und eine Sendeeinheit, die darauf ausgelegt ist, eine ID-Kennung der Mobilkommunikationskarte (1) und mindestens einen Authentifizierungsparameter des elektronisches Passes oder anderen elektronischen Dokuments an den Mobilkommunikationsnetzanbieter (15) des Mobilkommunikationsnetzes so zu übermitteln, dass die Nutzung der mobilen Kommunikationsdienste für die Mobilkommunikationskarte (1) anhand der ID-Kennung der Mobilkommunikationskarte (1) und anhand des mindestens einen Authentifizierungsparameters des elektronischen Ausweises oder anderen elektronischen Dokuments fernfreigegeben wird, wobei der mindestens eine Authentifizierungsparameter über die kontaktfreie Schnittstelle gesendet wird.

8. Benutzergerät (16) nach Anspruch 7, wobei das Benutzergerät (16) eine Verschlüsselungseinheit zum Verschlüsseln des mindestens einen Authentifizierungsparameters umfasst.

9. Benutzergerät (16) nach einem der vorhergehenden Ansprüche, wobei das Benutzergerät (16) einen Personalcomputer und/oder eine tragbare elektronische Vorrichtung, insbesondere ein Mobiltelefon, einen persönlichen digitalen Assistenten, PDA, einen digitalen Audioplayer und/oder einen Laptop, umfasst.

## Revendications

1. Procédé d'authentification à distance d'un utilisateur (2) pour une première utilisation d'une carte de communication mobile en vue d'un contrat relatif à l'utilisation de services de communication mobile d'un fournisseur de réseau de communication mobile (15) et pour débloquer la carte de communication mobile (1) pour l'utilisation permanente ou temporaire des services de communication mobile fournis par le fournisseur de réseau de communication mobile (15) par l'intermédiaire d'un réseau de communication mobile, dans lequel les services de communication mobile comprennent des services standards comme appeler, répondre à des appels, envoyer des messages et/ou des services réseau spécifiques comme appeler des numéros de téléphone tarifés ou établir des appels téléphoniques internationaux, dans lequel les services de communication mobile sont utilisables avec un équipement d'utilisateur (16), dans lequel l'équipement d'utilisateur (16) comprend une interface sans contact en tant que dispositif d'identification pour lire des données d'un passeport électronique ou d'un autre document électronique, dans lequel l'interface sans contact comprend une interface de communication en champ proche et/ou une interface d'identification par radiofréquence et/ou une interface ISO/IED 14443 (A, B et/ou C), le procédé comprenant :
- une première étape (20) comprenant une activation au moins temporairement de la carte de communication mobile (1), et
- une seconde étape (21) comprenant une lecture d'au moins un paramètre d'authentification du passeport électronique ou de l'autre document électronique par l'interface sans contact (17) et une soumission d'un identificateur de la carte de communication mobile (1) et pour l'authentification à distance de l'utilisateur (2) pour la première utilisation de la carte de communication mobile d'au moins un paramètre d'authentification du passeport électronique ou de l'autre document électronique au fournisseur de réseau de communication mobile (15) du réseau de communication mobile, dans lequel l'utilisation des services de communication mobile est autorisée à distance pour la carte de communication mobile (1) sur la base de l'identificateur de la carte de communication mobile (1) et sur la base dudit au moins un paramètre d'authentification du passeport électronique ou de l'autre document électronique, dans lequel ledit au moins un paramètre d'authentification est transmis par l'intermédiaire de l'interface sans contact,
dans lequel la première et la seconde étape (20, 21) sont effectuées par l'équipement d'utilisateur (16) muni de la carte de communication mobile (1).

2. Procédé selon la revendication 1, dans lequel, dans la seconde étape (21), l'identificateur et/ou ledit au moins un paramètre d'authentification est soumis de façon sécurisée cryptographiquement au fournisseur de réseau de communication mobile (15) du réseau de communication mobile.

3. Procédé selon l'une quelconque des revendications 1 ou 2, dans lequel la seconde étape (21) comprend en outre une transmission de l'âge, du sexe, du lieu de résidence et/ou de la nationalité de l'utilisateur (2) de la carte de communication mobile (1) au fournisseur de réseau mobile de communication (15) du réseau de communication mobile et une exécution de l'authentification à distance de l'identité personnelle de l'utilisateur.

4. Procédé selon l'une quelconque des revendications précédentes, dans lequel la seconde étape (21) comprend en outre une vérification de l'authenticité de l'identificateur et/ou dudit au moins un paramètre d'authentification.

5. Procédé selon l'une quelconque des revendications précédentes, dans lequel la première et/ou la seconde étape (20, 21) est/sont effectuée(s) par le fournisseur de réseau de communication mobile (15) du réseau de communication mobile.

6. Procédé selon l'une des revendications précédentes, dans lequel la seconde étape (21) fournit la preuve pour la mise en service définitive d'une carte SIM (carte d'identité d'abonné) ou d'une carte UICC (carte à circuit intégré universelle).

7. Equipement d'utilisateur (16) avec une interface sans contact en tant que dispositif d'identification pour l'authentification à distance d'un utilisateur (2) pour une première utilisation d'une carte de communication mobile en vue d'un contrat relatif à l'utilisation de services de communication mobile d'un fournisseur de réseau de communication mobile (15) et pour autoriser la carte de communication mobile (1) pour l'utilisation permanente ou temporaire des services de communication mobile fournis par le fournisseur de réseau de communication mobile (15) par l'intermédiaire d'un réseau de communication mobile, dans lequel l'interface sans contact comprend une interface de communication en champ proche et/ou une interface d'identification par radiofréquence et/ou une interface ISO/IED 14443 (A, B et/ou C), dans lequel le dispositif d'identification fourni par l'interface sans contact est configuré pour lire des données d'un passeport électronique ou d'un autre document électronique, dans lequel l'équipement d'utilisateur (18) comprend en outre un lecteur de carte destiné à être configuré pour lire la carte de communication mobile (1) et une unité d'émission configurée pour soumettre un identificateur de la carte de communication mobile (1) et au moins un paramètre d'authentification du passeport électronique ou de l'autre document électronique au fournisseur de réseau de communication mobile (16) du réseau de communication mobile, de telle sorte que l'utilisation des services de communication mobile est autorisée à distance pour la carte de communication mobile (1) sur la base de l'identificateur de la carte de communication mobile (1) et sur la base dudit au moins un paramètre d'authentification du passeport électronique ou de l'autre document électronique, dans lequel ledit au moins un paramètre d'authentification est transmis par l'intermédiaire de l'interface sans contact.

8. Equipement d'utilisateur (16) selon la revendication 7, dans lequel l'équipement d'utilisateur (16) comprend une unité de chiffrement pour chiffrer ledit au moins un paramètre d'authentification.

9. Equipement d'utilisateur (16) selon l'une des revendications précédentes, dans lequel l'équipement d'utilisateur (16) comprend un ordinateur personnel et/ou un dispositif électronique portable, en particulier un téléphone cellulaire, un assistant numérique personnel, PDA, un lecteur audio numérique, et/ou un ordinateur portable.
